# EUROPEAN PATENT APPLICATION

(11) **EP 4 807 076 A1**
(43) Date of publication of application: **16.09.2026**
(21) Application number: 25163147.9
(22) Date of filing: 12.03.2025
(51) Int. Cl.: D07B 1/16, B64D 1/22

(54) **A ROPE ASSEMBLY FOR A ROTORCRAFT**

(71) Applicant: AIRBUS HELICOPTERS DEUTSCHLAND GmbH, 86609 Donauwörth (DE)
(72) Inventor: HEIDER, Christoph, 86641 RAIN AM LECH (DE); DINCA, Alexandru, 86609 DONAUWÖRTH (DE); VOGEL, Dominik, 86462 LANGWEID (DE)
(74) Representative: GPI Brevets

(57) **Abstract**

The invention is related to rope assembly (7), comprising an inner load-carrying rope (10) that is adapted for providing a load-bearing connection between a first attachment point and a second attachment point; and an outer protective sleeve (20) that is loosely arranged on the inner load-carrying rope (10) and encloses the inner load-carrying rope (10); wherein the outer protective sleeve (20) is longer than the inner load-carrying rope (10) in loaded condition.

## Description

The invention is related to a rope assembly that is adapted for providing a load-bearing connection between a first attachment point and a second attachment point, for instance in order to attach a human and/or non-human external cargo to a rotorcraft.

Rotorcrafts, and in particular helicopters, are commonly used to fulfil aerial transportation and delivery tasks. By way of example, helicopters are used to transport and deliver loads to mountain regions in general and, more specifically, to mountain regions where no roads exist or where roads cannot be used for transportation and delivery, e. g. due to extreme weather conditions in winter and so on. Furthermore, helicopters are used in transportation and delivery of loads for military purposes or in the construction sector, where the loads may represent any kind of material. Moreover, helicopters can be used in firefighting for transportation of firefighting buckets and they are also very useful in wood logging for transporting harvested wood.

In addition, in civil, parapublic and military missions, helicopters may be used for rapidly inserting and/or extracting persons into/from various environments, in particular environments that do not permit landing of the helicopters. Such environments may e. g. include maritime environments such as offshore as well as oil and gas platforms, and terrestrial environments such as land in vegetated areas, mountains and urban territory.

In order to enable a given helicopter for transportation of an external load in general, it can be equipped with a cargo hook device to which a rope assembly for connection to the external load can be attached. Thus, a given external load can be suspended from the helicopter by means of the rope assembly. More particularly, the rope assembly can be used to connect any non-human external load or non-human external cargo (NHEC) and/or any human external load or human external cargo (HEC) that is to be transported to respective cargo hooks of a cargo hook device of the given helicopter. Therefore, the rope assembly usually comprises a load-carrying rope, which may also be referred to as longline, that is provided for forming a load-bearing connection between a NHEC and/or a HEC and the given helicopter.

By way of example, the documents DE 10 2020 130 832 A1 and JP 2002339280 A describe so-called textile Kernmantle ropes which may be used as load-carrying ropes in general. These Kernmantle ropes have a protective sheath or cover and are characterized by the fact that an inner core, which is mainly responsible for forming a respective load-bearing connection, is covered by a fine braid or sheath. The sheath can be made of the same or a different textile material than the inner core.

Furthermore, an additional cover may be attached to such a rope with a Velcro fastener or a zipper. The additional cover may also be used to attach an electrical cable to the rope. In general, such additional covers are used to protect the ropes from environmental influences.

The document DE 20 2007 013 135 U, in turn, describes a traction device which is designed as a cable which has a core area and a jacket area. More specifically, the traction device is made of a fiber material consisting of aramid base fibers and comprises the core area and the jacket area, with the jacket area consisting of densely woven fibers and the core area being formed of comparatively less densely woven fibers. The jacket area completely surrounds the core area around the circumference, without the fibers of the core area being interwoven with those of the jacket area.

However, conventional load-carrying ropes as described above suffer from the fact that they generally exhibit a comparatively low cut-resistance in loaded condition. More particularly, when a rope or a textile sheath is stretched because of tension, it may easily be cut through, e. g. as a result of an undesired contact with sharp edged and/or abrasive items. In aerial transportation, however, this may lead to catastrophic events due to a loss of respectively transported HEC and/or NHEC, wherein the consequences are particularly severe and potentially fatal if transported HEC is lost during aerial transportation. In addition, if the rope is cut through in operation, this may cause rebound of the previously tensioned rope towards respective rotorcraft rotor blades, thus, resulting in a rotorcraft crash.

It is, therefore, an object of the present invention to provide a new rope assembly that is at least suitable for suspending a NHEC or HEC from a helicopter, or more generally any rotorcraft, and that is at least embodied to reduce the risk of being cut through in operation.

This object is solved by a rope assembly comprising the features of claim 1. More specifically, according to the invention the rope assembly comprises an inner load-carrying rope and an outer protective sleeve. The inner load-carrying rope is adapted for providing a load-bearing connection between a first attachment point and a second attachment point. The outer protective sleeve is loosely arranged on the inner load-carrying rope and encloses the inner load-carrying rope, wherein the outer protective sleeve is longer than the inner load-carrying rope in loaded condition.

Advantageously, by loosely arranging the outer protective sleeve on the inner load-carrying rope, the outer protective sleeve can be uncoupled from the inner load-carrying rope with respect to load-carrying duties. This may be improved if an inner diameter of the outer protective sleeve is significantly greater than an outer diameter of the inner load-carrying rope and/or if an inner surface of the outer protective sleeve is made as smooth as possible, e. g. by means of a suitable coating or impregnation, such that the friction between the outer protective sleeve on the inner load-carrying rope is at least reduced.

Furthermore, by forming the outer protective sleeve longer than the inner load-carrying rope in loaded condition, the outer protective sleeve exhibits a predefined overlength compared to the inner load-carrying rope, i. e. it is preferably significantly longer than the inner load-carrying rope in the loaded condition and, accordingly, also in the unloaded condition. Thus, the outer protective sleeve is un-tensioned at any time due to its overlength compared to the inner load-carrying rope. Accordingly, when a sharp edge or rough surface comes into cutting or rubbing contact with the rope assembly, it initially contacts the outer protective sleeve which is un-tensioned and, thus, having unstressed or relaxed textile fibers. Compared to stretched textile fibers, such unstressed or relaxed textile fibers provide for a high degree of cut resistance.

More particularly, when a sharp edge or rough surface comes into cutting or rubbing contact with the rope assembly the outer protective sleeve preferably initially rolls or glides on the inner load-carrying rope. In this phase, there is virtually no wear or abrasion neither on the outer protective sleeve, nor on the inner load-carrying rope. If, however, the outer protective sleeve no longer rotates on the inner load-carrying rope, the outer protective sleeve gradually wears out. But since the textile fibers of the outer protective sleeve are unstressed or relaxed, they are not cut through but only gradually worn down, thus, increasing the cut resistance of the rope assembly as a whole. In order to expand this wear process in time, the outer protective sleeve may be embodied with suitable wear-resistant fibers.

Advantageously, if an outer protective sleeve of a given rope assembly is worn out, e. g. as result of a comparatively rough use of the rope assembly, the outer protective sleeve may easily be replaced and the respective inner load-carrying rope, which is usually comparatively expensive, may continue to be used. In fact, during such rough use the inner load-carrying rope is protected by the outer protective sleeve and does not experience any external wear and only the outer protective sleeve wears out.

As the inventive rope assembly provides for an increased cut resistance, it advantageously increases aerial transportation security and flight safety in transportation of NHEC and/or HEC outside a rotorcraft. In particular, the inventive rope assembly increases operational safety, especially when transporting HEC, as e. g. during medical evacuations in alpine environments contact with sharp edges, rocks, trees, cable cars, mountain railway suspension cables or high-voltage transmission lines cannot be avoided totally. Likewise, when transporting building materials and tree trunks, the inventive rope assembly increases operational safety for a respective ground crew and for the rotorcraft if contact with abrasive and sharp edges occurs.

According to an aspect of the present invention, the outer protective sleeve comprises textile fibers and is arranged on the inner load-carrying rope in a crumpled state.

The textile fibers may comprise at least one of aramid fibers, polyamide fibers, or glass fibers.

Preferably, a predetermined difference in length between the outer protective sleeve and the inner load-carrying rope in the loaded condition is adapted to enable the textile fibers of the outer protective sleeve to remain unstressed when the inner load-carrying rope is in the loaded condition.

Preferably, the outer protective sleeve is cut-resistant.

By way of example, the outer protective sleeve may be at least 30 % longer than the inner load-carrying rope in the loaded condition.

Preferably, the outer protective sleeve is rotatably and/or glidingly arranged on the inner load-carrying rope.

The outer protective sleeve may be coated and/or impregnated on its inner surface for reducing a frictional resistance between the outer protective sleeve and the inner load-carrying rope.

For instance, the outer protective sleeve may be coated on its inner surface with polytetrafluoroethylene.

Preferably, an inner diameter of the outer protective sleeve is greater than an outer diameter of the inner load-carrying rope.

The inner load-carrying rope may be provided with associated attachment interfaces which are adapted to be attached to the first attachment point and the second attachment point.

The associated attachment interfaces may comprise at least one of a clevis or a carabiner.

According to one aspect, the inner load-carrying rope may be a textile rope that comprises at least an inner core.

According to another aspect, the inner load-carrying rope may be a braided rope with a predetermined number of strands.

The inner load-carrying rope may be provided for attaching a human and/or non-human external cargo to a rotorcraft, wherein the first attachment point is provided on the rotorcraft, and wherein the second attachment point is associated with the human and/or non-human external cargo.

Preferred embodiments of the invention are outlined by way of example in the following description with reference to the attached drawings. In these attached drawings, identical or identically functioning components and elements are labeled with identical reference numbers and characters and are, consequently, only described once in the following description.
- Figure 1 shows a perspective view of a rotorcraft that transports NHEC using a rope assembly according to the present invention,
- Figure 2 shows a perspective view of the rope assembly of Figure 1 with an inner load-carrying rope and an outer protective sleeve according to a first variant,
- Figure 3 shows a perspective view of the rope assembly of Figure 1 with an inner load-carrying rope and an outer protective sleeve according to a second variant,
- Figure 4 shows a perspective view of the outer protective sleeve of Figure 2 and Figure 3 in unloaded condition of the inner load-carrying rope of Figure 2 and Figure 3,
- Figure 5 shows a perspective view of the outer protective sleeve of Figure 2 and Figure 3 in loaded condition of the inner load-carrying rope of Figure 2 and Figure 3, and
- Figure 6 shows a perspective view of the rope assembly of Figure 3 with associated attachment interfaces.

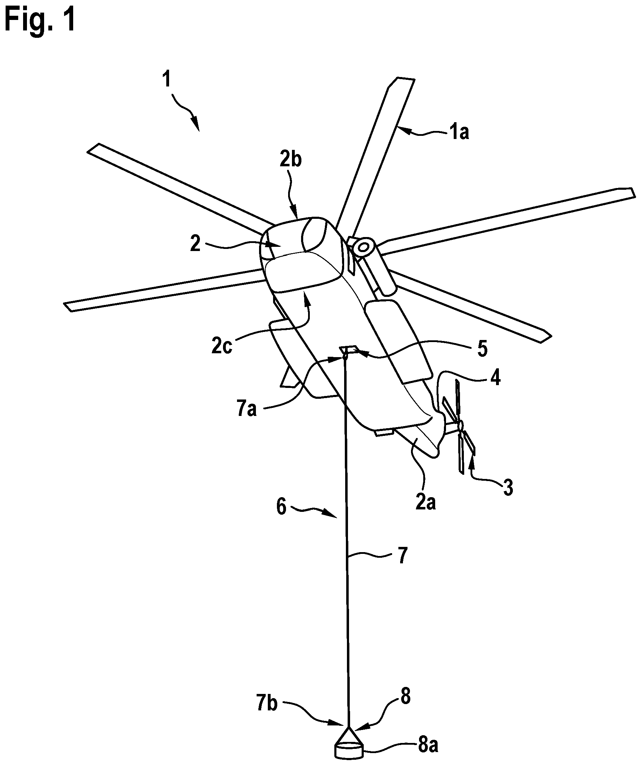

Figure 1 shows a rotorcraft 1 that illustratively comprises a fuselage 2 with a bottom shell 2c. By way of example, the fuselage 2 forms a cabin 2b for passengers and/or cargo and a tail boom 2a is mounted to the fuselage 2.

The rotorcraft 1 illustratively further comprises at least one main rotor 1a configured to provide lift and forward or backward thrust during operation, and at least one counter-torque device 3 configured to provide counter-torque during operation, i. e. to counter the torque created by rotation of the at least one main rotor 1a for purposes of balancing the rotorcraft 1 in terms of yaw.

The at least one counter-torque device 3 is illustratively provided at an aft section of the tail boom 2a, which preferably further comprises a fin 4. However, it should be noted that the at least one counter-torque device 3, as well as the fin 4 provided at the aft section of the tail boom 2a, are merely described for illustrating one possible realization of the rotorcraft 1.

According to one aspect, the rotorcraft 1 is provided with cargo transportation means 6. Illustratively, the rotorcraft 1 with the cargo transportation means 6 is shown in operation, i. e. during transportation of an external cargo 8a. By way of example, the external cargo 8a is a NHEC. However, an HEC may likewise be transported below the rotorcraft 1 using the cargo transportation means 6.

Illustratively, the cargo transportation means 6 are connected to an associated attachment point 5 on the bottom shell 2c of the rotorcraft 1. The attachment point 5 may e. g. be embodied by a cargo hook device and is, hereinafter, referred to as "the upper attachment point 5".

The cargo transportation means 6 illustratively comprises a rope assembly 7. By way of example, the rope assembly 7 comprises an attachment interface 7a which is illustratively attached at the attachment point 5 to the rotorcraft 1. Therefore, the attachment interface 7a is also referred to hereinafter as "the upper attachment interface 7a".

The rope assembly 7 preferably further comprises an attachment interface 7b which is illustratively attached at an attachment point 8 to the cargo 8a that is to be transported below the rotorcraft 1 and, accordingly, suspended from the rotorcraft 1. Therefore, the attachment interface 7b is also referred to hereinafter as "the lower attachment interface 7b". The attachment point 8, which is, hereinafter, referred to as "the lower attachment point 8", may e. g. be embodied by suitable external cargo attachment means, such as a ring.

By way of example, the rotorcraft 1 is embodied as a helicopter. However, use of the cargo transportation means 6 and, more particularly, the rope assembly 7 is not limited to use with a helicopter. Instead, the cargo transportation means 6, i. e. the rope assembly 7, may at least be used with other rotorcrafts, such as e. g. tiltrotor aircrafts, compound helicopters, multicopters and so on.

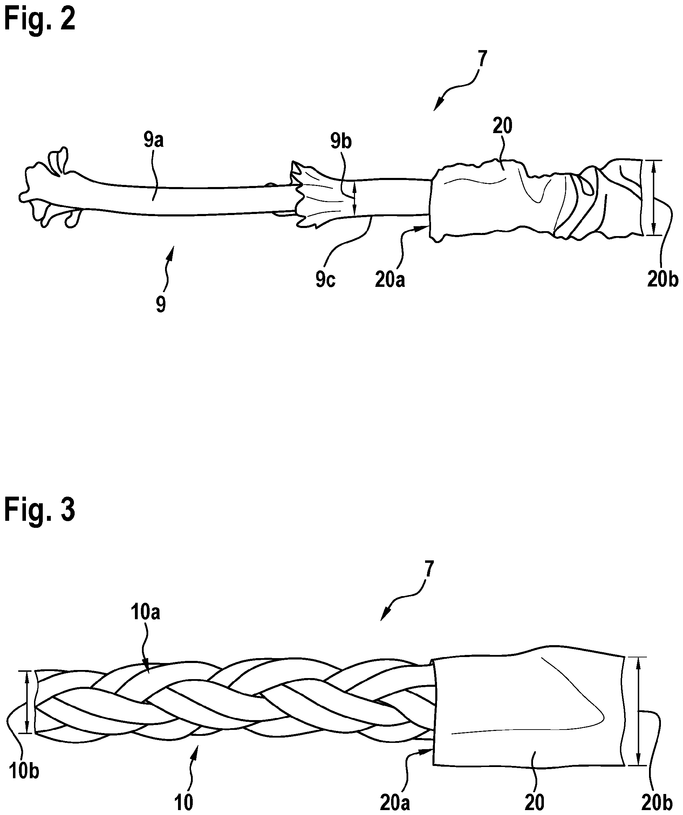

Figure 2 shows the rope assembly 7 of Figure 1 according to a first embodiment. The rope assembly 7 comprises an inner load-carrying rope 9 and an outer protective sleeve 20. The inner load-carrying rope 9 is adapted for providing a load-bearing connection between a first attachment point, e. g. the upper attachment point 5 of Figure 1, and a second attachment point, e. g. the lower attachment point 8 of Figure 1. The outer protective sleeve 20 is loosely arranged on the inner load-carrying rope 9 and encloses the inner load-carrying rope 9.

According to the present invention, the outer protective sleeve 20 is longer than the inner load-carrying rope 9 in loaded condition. More specifically, the outer protective sleeve 20 is preferably at least 30 % longer than the inner load-carrying rope 9 in the loaded condition. Furthermore, an inner diameter 20b of the outer protective sleeve 20 is preferably greater than an outer diameter 9b of the inner load-carrying rope 9.

The outer protective sleeve 20 is preferably cut-resistant. More particularly, the outer protective sleeve 20 preferably comprises textile fibers. For instance, the textile fibers may comprise at least one of aramid fibers, polyamide fibers, or glass fibers. The textile fibers may advantageously be selected to increase also a respective wear- and/or chaffing resistance of the outer protective sleeve 20.

Illustratively, the outer protective sleeve 20 comprises an inner surface 20a. Preferably, the outer protective sleeve 20 is coated and/or impregnated on its inner surface 20a for reducing a frictional resistance between the outer protective sleeve 20 and the inner load-carrying rope 9. By way of example, the outer protective sleeve 20 may be coated on its inner surface 20a with polytetrafluoroethylene.

The outer protective sleeve 20 is preferably rotatably and/or glidingly arranged on the inner load-carrying rope 9 independent of its current load condition, i. e. independent on whether the inner load-carrying rope 9 is in the loaded condition or in the unloaded condition. Preferably, a predetermined difference in length between the outer protective sleeve 20 and the inner load-carrying rope 9 in the loaded condition is adapted to enable the textile fibers of the outer protective sleeve 20 to remain unstressed when the inner load-carrying rope 9 is in the loaded condition.

The inner load-carrying rope 9, in turn, is illustratively a textile rope that comprises at least an inner core 9a. Optionally, the inner core 9a may be provided with a protective sheath 9b. For instance, the inner load-carrying rope 9 may be embodied as a Kernmantle rope.

Figure 3 shows the rope assembly 7 of Figure 1 according to a second embodiment. In analogy to Figure 2, the rope assembly 7 according to the second embodiment comprises the outer protective sleeve 20 of Figure 2 with the inner surface 20a and the inner diameter 20b. However, in contrast to the first embodiment of Figure 2, the rope assembly 7 now comprises an inner load-carrying rope 10 instead of the inner load-carrying rope 9 of Figure 2.

The inner load-carrying rope 10 is illustratively a braided rope with a predetermined number of strands 10a and an outer diameter 10b. By way of example, the braided rope is an 8-strand square braided rope. The outer diameter 10b of the inner load-carrying rope 10 is preferably smaller than the inner diameter 20b of the outer protective sleeve 20.

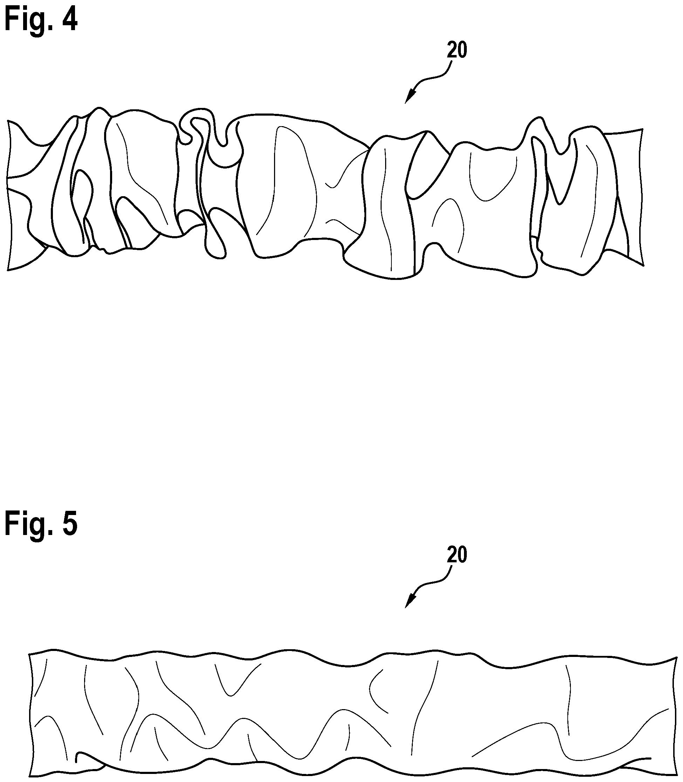

Figure 4 shows the outer protective sleeve 20 of Figure 2 and Figure 3 in an unloaded condition of the rope assembly 7 of Figure 2 and Figure 3, i. e. in an unloaded condition of the inner load-carrying ropes 9 and 10 of Figure 2 and Figure 3. As the outer protective sleeve 20 is longer, and preferably significantly longer than the inner load-carrying ropes 9 and 10 of Figure 2 and Figure 3 in the loaded condition, the outer protective sleeve 20 is crumpled, i. e. in a crumpled state, when it is arranged on the inner load-carrying ropes 9 and 10 of Figure 2 and Figure 3 in the unloaded condition.

Figure 5 shows the outer protective sleeve 20 of Figure 2 and Figure 3 in the loaded condition of the rope assembly 7 of Figure 2 and Figure 3, i. e. in the loaded condition of the inner load-carrying ropes 9 and 10 of Figure 2 and Figure 3. As the outer protective sleeve 20 is longer, and preferably significantly longer than the inner load-carrying ropes 9 and 10 of Figure 2 and Figure 3 in the loaded condition, the outer protective sleeve 20 of Figure 5 is still in the crumpled state. However, in comparison to Figure 4, the outer protective sleeve 20 is now less crumpled.

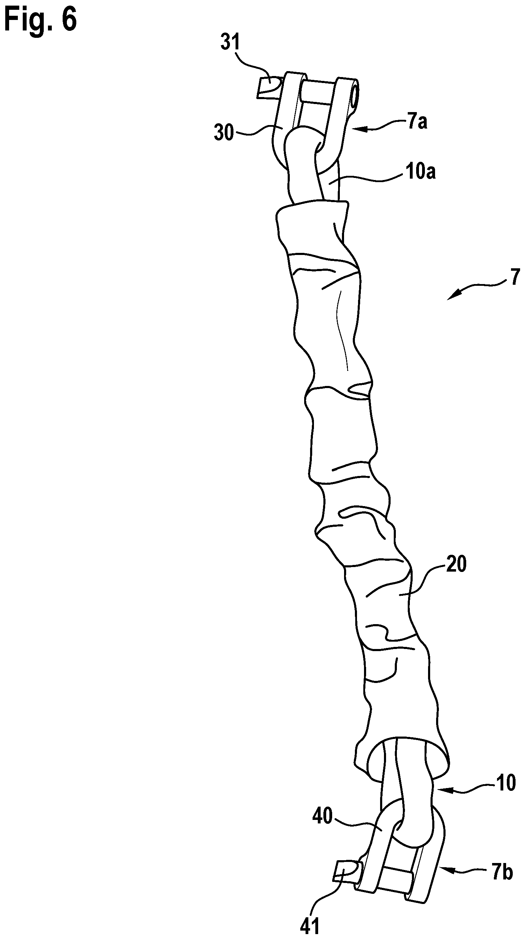

Figure 6 shows the rope assembly 7 of Figure 3 with the inner load-carrying rope 10 and the outer protective sleeve 20. The inner load-carrying rope 10 is illustratively the braided rope with the predetermined number of strands 10a. Figure 6 further illustrates the arrangement of the outer protective sleeve 20 on the inner load-carrying rope 10 in the crumpled state.

However, in contrast to Figure 3 the inner load-carrying rope 10 is now provided with the upper and lower attachment interfaces 7a, 7b of Figure 1 which are respectively adapted to be attached to the upper attachment point 5 and the lower attachment point 8 of Figure 1. Illustratively, the upper and lower attachment interfaces 7a, 7b respectively comprise a clevis 30, 40. By way of example, the clevis 30 is provided with a securing pin 31 and the clevis 40 is provided with a securing pin 41.

It should be noted that modifications to the above described embodiments are within the common knowledge of the person skilled in the art and, thus, also considered as being part of the present invention. For instance, use of the cargo transportation means 6 of Figure 1 and, more particularly, the rope assembly 7 described above with respect to Figure 1 to Figure 6 is not limited to use with a helicopter or other rotorcrafts, such as e. g. tiltrotor aircrafts, compound helicopters, multicopters and so on. Instead, the rope assembly 7 may generally be used for any application wherein a load-bearing connection is to be established between two separate attachment points.

### Reference List

- 1: rotorcraft
- 1a: main rotor
- 2: fuselage
- 2a: tail boom
- 2b: cabin
- 2c: bottom shell
- 3: counter-torque device
- 4: fin
- 5: cargo hook device
- 6: cargo transportation means
- 7: rope assembly
- 7a, 7b: rope assembly attachment interfaces
- 8: non-human cargo attachment means
- 8a: non-human cargo
- 9: load-carrying textile rope
- 9a: inner core
- 9b: outer diameter of inner load-carrying rope
- 9c: protective sheath
- 10: load-carrying braided rope
- 10a: braided rope strands
- 10b: outer diameter of inner load-carrying rope
- 20: protective sleeve
- 20a: inner surface of outer protective sleeve
- 20b: inner diameter of outer protective sleeve
- 30: upper clevis
- 31: upper clevis securing pin
- 40: lower clevis
- 41: lower clevis securing pin

## Claims

1. A rope assembly (7), comprising:
an inner load-carrying rope (9; 10) that is adapted for providing a load-bearing connection between a first attachment point (5) and a second attachment point (8); and
an outer protective sleeve (20) that is loosely arranged on the inner load-carrying rope (9; 10) and encloses the inner load-carrying rope (9; 10); wherein the outer protective sleeve (20) is longer than the inner load-carrying rope (9; 10) in loaded condition.

2. The rope assembly (7) of claim 1,
wherein the outer protective sleeve (20) comprises textile fibers; and wherein the outer protective sleeve (20) is arranged on the inner load-carrying rope (9; 10) in a crumpled state.

3. The rope assembly (7) of claim 2,
wherein the textile fibers comprise at least one of aramid fibers, polyamide fibers, or glass fibers.

4. The rope assembly (7) of claim 2 or 3,
wherein a predetermined difference in length between the outer protective sleeve (20) and the inner load-carrying rope (9; 10) in the loaded condition is adapted to enable the textile fibers of the outer protective sleeve (20) to remain unstressed when the inner load-carrying rope (9; 10) is in the loaded condition.

5. The rope assembly (7) of any one of the preceding claims,
wherein the outer protective sleeve (20) is cut-resistant.

6. The rope assembly (7) of any one of the preceding claims, wherein the outer protective sleeve (20) is at least 30 % longer than the inner load-carrying rope (9; 10) in the loaded condition.

7. The rope assembly (7) of any one of the preceding claims,
wherein the outer protective sleeve (20) is rotatably and/or glidingly arranged on the inner load-carrying rope (9; 10).

8. The rope assembly (7) of any one of the preceding claims,
wherein the outer protective sleeve (20) is coated and/or impregnated on its inner surface (20a) for reducing a frictional resistance between the outer protective sleeve (20) and the inner load-carrying rope (9; 10).

9. The rope assembly (7) of claim 8,
wherein the outer protective sleeve (20) is coated on its inner surface (20a) with polytetrafluoroethylene.

10. The rope assembly (7) of any one of the preceding claims,
wherein an inner diameter (20b) of the outer protective sleeve (20) is greater than an outer diameter (9b; 10b) of the inner load-carrying rope (9; 10).

11. The rope assembly (7) of any one of the preceding claims,
wherein the inner load-carrying rope (9) is provided with associated attachment interfaces (7a, 7b) which are adapted to be attached to the first attachment point (5) and the second attachment point (8).

12. The rope assembly (7) of claim 11,
wherein the associated attachment interfaces (7a, 7b) comprise at least one of a clevis (30, 40) or a carabiner.

13. The rope assembly (7) of any one of the preceding claims,
wherein the inner load-carrying rope (9) is a textile rope that comprises at least an inner core (9a).

14. The rope assembly (7) of any one of claims 1 to 12,
wherein the inner load-carrying rope (10) is a braided rope with a predetermined number of strands (10a).

15. The rope assembly (7) of any one of the preceding claims,
wherein the inner load-carrying rope (9; 10) is provided for attaching a human and/or non-human external cargo (8a) to a rotorcraft (1); wherein the first attachment point (5) is provided on the rotorcraft (1); and wherein the second attachment point (8) is associated with the human and/or non-human external cargo (8a).
